# EUROPÄISCHE PATENTANMELDUNG

(11) **EP 1 847 409 A1**
(43) Veröffentlichungstag der Anmeldung: **24.10.2007**
(21) Anmeldenummer: 06008018.1
(22) Anmeldetag: 18.04.2006
(51) Int. Cl.: B60J 7/08, B60J 7/10

(54) **Lastentransportfahrzeug mit einem Abdecksystem**

(71) Anmelder: Franz Xaver Meiller Fahrzeug- und Maschinenfabrik-GmbH & Co KG, 80997 München (DE)
(72) Erfinder: Baudilla, Peter, Dipl. Ing., 82216 Maisach (DE)
(74) Vertreter: Tiesmeyer, Johannes

(57) **Zusammenfassung**

Die Erfindung betrifft ein Lastentransportfahrzeug (10) mit einem Abdecksystem zum Abdecken eines auf einem Ladebereich des Lastentransportfahrzeugs (10) positionierten Ladegutbehälters unter Verwendung eines flexiblen Abdeckelements, wobei das Abdecksystem zwei Abdeckbetätigungsarme (22, 30) umfasst zur Handhabung des flexiblen Abdeckelementes in einem Abdeckbetriebszustand und wobei die Abdeckbetätigungsarme (22, 30) in dem Abdeckbetriebszustand in Fahrzeuglängsrichtung (L) vor und hinter dem Ladebereich positioniert und quer zur Fahrzeugslängsrichtung (L) von einer ersten seitlich orientierten Stellung über die Vertikale hinaus zu einer zweiten seitlich orientierten Stellung (C) schwenkbar sind, um das längs einer Verbindungslinie (V) zwischen den freien Enden der Abdeckbetätigungsarme (22, 30) hängend gehaltene Abdeckelement unter Aufrechterhaltung eines Mindestabstandes zwischen der Verbindungslinie und dem Ladegutbehälter (14) über den Ladegutbehälter (14) zu ziehen.

## Beschreibung

Die vorliegende Erfindung betrifft ein Lastentransportfahrzeug mit einem Abdecksystem zum Abdecken eines auf einem Ladebereich des Lastentransportfahrzeugs positionierten Ladegutbehälters unter Verwendung eines flexiblen Abdeckelements, wobei das Abdecksystem zwei Abdeckbetätigungsarme umfasst zur Handhabung des flexiblen Abdeckelements in einem Abdeckbetriebszustand.

Bisher bekannte Lösungen beruhen in ihrem Grundprinzip darauf, dass ein Abdeckelement, beispielsweise eine Plane, von einer am Lastenfahrzeug oder am Ladegutbehälter angebrachten Rolle abgewickelt und in Fahrzeuglängsrichtung entlang oder über der Oberkante des Ladegutbehälters in Fahrzeuglängsrichtung von vorne nach hinten ausgebreitet wird. Es wird hierzu beispielsweise auf die EP 1 020 312 A1 und die WO 98/05527 verwiesen. Ferner sind auch Systeme bekannt, bei denen die Plane vermittels seitlich des Ladegutbehälters angebrachter Schwenkarme in Fahrzeuglängsrichtung von vorne nach hinten über den Behälter geschwenkt wird, wobei auch bei diesen Systemen die Plane von einer am Fahrzeug bzw. zwischen den beiden seitlichen Schwenkarmen angebrachten Rolle abgewickelt wird. Es wird hierzu auf die FR 2 752 205 A1 und die US 2004/0207230 A1 verwiesen.

Das in nach oben offenen Behältern zu transportierende Ladegut ist häufig sperrig und mit Kanten und Ecken versehen, welche über die Oberkante des Ladegutbehälters vorstehen können. Dies ist beispielsweise der Fall, wenn Steinblöcke, Sperrmüll, zu entsorgende Haushaltsgeräte wie Kühlschränke etc., oder ggf. teilweise zerkleinerte Möbelstücke und dgl. zu transportieren sind. Beim Ausbreiten eines Abdeckelements über solchem Ladegut besteht immer die Gefahr, dass der Vorgang des Abrollens des Abdeckelements behindert wird, oder dass sich das insbesondere als Netz ausgebildete Abdeckelement an einer Ladegutkante bzw. -ecke verfängt, so dass der Vorgang des Ausbreitens gestört wird. Dieses Problem stellt sich in besonderem Maße bei Abdecksystemen, welche sehr nahe entlang der Oberkante des Ladegutbehälters geführt werden, wie beispielsweise in der EP 1 020 312 A1 und der WO 98/05527 dargestellt.

Bei den Lösungen, welche seitlich am Lastentransportfahrzeug angebrachte Schwenkarme aufweisen, um das Abdeckelement in Fahrzeuglängsrichtung über den Behälter zu ziehen, stellt sich dieses Problem ebenfalls, da sich beim Verschwenken dieser Schwenkarme von vorne nach hinten im Abdeckelement ein Durchhang ausbildet, der sich auf die Oberkante des Ladegutbehälters absenkt und am überstehenden Transportgut hängen bleiben kann, wenn der Schwenkarm weiter nach hinten verschwenkt wird. Da die Entfernung zwischen einer vorderen oberen Kante des Ladegutbehälters und einer hinteren oberen Kante des Ladegutbehälters in der Regel recht groß ist, wird das Abdeckelement über einen großen Bereich der Schwenkbewegung in Fahrzeuglängsrichtung nahezu parallel entlang der Oberkante des Ladegutbehälters gezogen, wodurch die Gefahr des Einhängens an Ladegutkanten bzw. -ecken deutlich erhöht ist. Ferner stellt sich bei seitlich am Fahrzeug und Ladegutbehälter in Fahrzeuglängsrichtung verschwenkbaren Schwenkarmen das Problem, dass diese entweder nach dem Abdeckvorgang weggenommen werden müssen oder die Behälterbreite derart reduziert werden muss, dass die Gesamtbreite des Lastenfahrzeugs mit Behälter und ggf. seitlichen Schwenkarmen eine gesetzlich zulässige Gesamtbreite nicht überschreitet. Es wird hierzu noch einmal auf die FR 2 752 205 und die US 2004/0207230 A1 verwiesen.

Allen genannten Systemen ist auch die Verwendung einer Rolle gemein, auf der das Abdeckelement aufgerollt ist und zum Abdecken abgewickelt wird. Solche Rollenmechanismen sind allen äußeren Einflüssen, wie beispielsweise Witterung, Verschmutzung und dgl., ausgesetzt, so dass das Problem besteht, dass ein Rollenmechanismus aufgrund seiner Abnutzung nicht mehr korrekt funktioniert, wodurch das Abdeckelement nicht mehr vollständig abgewickelt bzw. aufgerollt werden kann.

Aufgabe der Erfindung ist es demgegenüber, ein Abdecksystem bereitzustellen, mit dem ein Abdeckvorgang zuverlässig durchgeführt werden kann.

Zur Lösung dieser Aufgabe schlägt die Erfindung vor, dass die Abdeckbetätigungsarme in dem Abdeckbetriebszustand in Fahrzeuglängsrichtung vor und hinter dem Ladebereich positioniert und quer zur Fahrzeugslängsrichtung von einer ersten seitlich orientierten Stellung über die Vertikale hinaus zu einer zweiten seitlich orientierten Stellung schwenkbar sind, um das längs einer Verbindungslinie zwischen den freien Enden der Abdeckbetätigungsarme hängend gehaltene Abdeckelement unter Aufrechterhaltung eines Mindestabstandes zwischen der Verbindungslinie und dem Ladegutbehälter über den Ladegutbehälter zu ziehen.

Da bei einer solchen Anordnung das Abdeckelement nur über die relativ kurze Breitenrichtung des Ladegutbehälters geschwenkt und gezogen werden muss, befindet sich das zwischen den freien Enden der Abdeckbetätigungsarme hängend gehaltene Abdeckelement während eines Großteils der Schwenkbewegung in einem großen Abstand zum zu überdeckenden Ladegut. Hierdurch wird die Gefahr, dass sich das Abdeckelement mit Kanten bzw. Ecken des Ladeguts verhakt, verringert.

Gemäß einer bevorzugten Weiterbildung sind die Abdeckbetätigungsarme insbesondere teleskopisch längenverstellbar.

Durch die Längenverstellbarkeit kann der Mindestabstand zwischen der Verbindungslinie und dem Ladegutbehälter an unterschiedliche Höhen von Ladegutbehältern bzw. auch an unterschiedlich hoch über die Oberkante des Ladegutbehälters herausragendes Ladegut angepasst werden. Die teleskopische Längenverstellung kann beispielsweise durch ineinander greifende Stangenelemente erreicht werden, an denen Bohrungen vorgesehen sind, die derart miteinander fluchten, dass ein Arretierstift eingeführt werden kann, so dass die ineinander geschobenen Stangenelemente in axialer Richtung relativ zueinander festgelegt sind. Neben einer solchen teleskopischen Längenverstellbarkeit ist es auch denkbar, dass eine Verlängerung durch Ausklappen eines oder mehrerer Verlängerungsstücke erreicht wird.

Um eine automatische Längenverstellung der Abdeckbetätigungsarme zu ermöglichen, kann eine Antriebseinrichtung vorgesehen werden. Dabei kann eine solche Antriebseinrichtung insbesondere für jeden Abdeckbetätigungsarm einen Hydraulikzylinder oder einen Pneumatikzylinder oder einen Elektromotor umfassen.

Eine solche automatische Längenverstellung ermöglicht ein Verändern des Mindestabstandes zwischen der Verbindungslinie und dem Ladegutbehälter während des Schwenkens der beiden Abdeckbetätigungsarme von der ersten in die zweite seitliche Stellung. Dabei kann diese Längenverstellung entweder von einer Bedienperson durch Betätigung entsprechender Steuerungselemente erfolgen. Ferner ist es in diesem Zusammenhang auch denkbar, dass eine Steuerung vorgesehen wird, welche die Längenverstellung in Abhängigkeit von einer Schwenkstellung anpasst, so dass beispielsweise in der ersten seitlichen Stellung die Abdeckbetätigungsarme ganz eingezogen sind und in einer Schwenkstellung im Bereich der Vertikalen stark oder ganz ausgefahren sind, so dass der Abstand zwischen der Verbindungslinie und dem Ladegutbehälter möglichst groß ist.

Um zwischen den beiden Abdeckbetätigungsarmen durch das Aufhängen des Abdeckelements hervorgerufene Zugkräfte abzustützen, ist es bevorzugt, dass im Abdeckbetriebszustand zwischen den beiden Abdeckbetätigungsarmen ein von diesen gesondertes Stabelement befestigbar ist, an dem das Abdeckelement anbringbar ist, wobei das Stabelement vorzugsweise in seiner Länge verstellbar ist.

Ein solches Stabelement führt zu einer stabilen Rahmenkonstruktion, welche gewährleistet, dass die Abdeckbetätigungsarme im Wesentlichen parallel zu den vorderen bzw. hinteren Begrenzungswandungen des Ladegutbehälters verschwenkt werden. Um das Abdeckelement am Stabelement anbringen zu können, können am Stabelement Haken vorgesehen sein, an denen das Abdeckelement angehängt werden kann. Durch die bevorzugte Längenverstellbarkeit des Stabelements kann dieses verkürzt werden, so dass es auf eine für die Unterbringung am Fahrgestell des Fahrzeugs geeignete Größe reduziert werden kann. Schließlich kann ein längenverstellbares Stabelement Abstandsveränderungen zwischen den beiden Abdeckbetätigungsarmen aufgrund unterschiedlicher Schwenkstellungen oder/und unterschiedlicher Länge ausgleichen.

Für den Fahrbetrieb ist es bevorzugt, dass die beiden Abdeckbetätigungsarme in einer Transportstellung positionierbar sind, in der sie innerhalb einer das Fahrzeug mit aufliegendem Behälter in Draufsicht umschreibenden Kontur liegen.

Dabei wird insbesondere vorgeschlagen, dass der vor dem Ladebereich angeordnete vordere Abdeckbetätigungsarm in seiner Transportstellung innerhalb einer Schwenkebene liegt, in der er im Abdeckbetriebszustand schwenkbar ist.

Ferner wird als Weiterbildung vorgeschlagen, dass der hinter dem Ladebereich angeordnete hintere Abdeckbetätigungsarm in seiner Transportstellung quer zu der Schwenkebene orientiert ist, in der er im Abdeckbetriebszustand schwenkbar ist.

Damit der hintere Abdeckbetätigungsarm in die Transportstellung bzw. den Abdeckbetriebszustand gebracht werden kann, wird vorgeschlagen, dass der hintere Abdeckbetätigungsarm beweglich an einem drehbar am Fahrzeug angebrachten Ausleger angebracht ist. Dabei ist vorgesehen, dass der Ausleger von der Transportstellung in den Abdeckbetriebszustand in einer zur Schwenkebene des hinteren Abdeckbetätigungsarms im Wesentlichen orthogonalen Auslegerebene drehbar ist, vorzugsweise um 180°. Ferner ist der hintere Abdeckbetätigungsarm bezüglich des Auslegers in der Auslegerebene drehbar, vorzugsweise um etwa 90°.

Der Abdeckbetätigungsarm und der Ausleger sind somit gelenkig zueinander verstellbar, so dass der Abdeckbetätigungsarm durch eine Schwenkbewegung des Auslegers in der Auslegerebene um etwa 180° und eine Schwenkbewegung des hinteren Abdeckbetätigungsarms in der Auslegerebene um etwa 90° von der Transportstellung in den Abdeckbetriebszustand gebracht werden kann. Diese beiden Schwenkbewegungen lassen sich nacheinander oder aber auch gleichzeitig durchführen. Im Abdeckbetriebszustand verläuft der Ausleger im Wesentlichen parallel zur Fahrzeuglängsrichtung und der hintere Abdeckbetätigungsarm erstreckt sich im Wesentlichen orthogonal zum Ausleger seitlich vom Fahrzeug weg.

In einer zusammengeklappten Transportstellung können der Ausleger und der hintere Abdeckbetätigungsarm im Wesentlichen parallel zueinander sowie parallel zur Fahrzeuglängsrichtung seitlich von einer Fahrzeuglängsmittellinie am Fahrzeug angeordnet sein. Dabei sind der hintere Abdeckbetätigungsarm und der Ausleger seitlich eines Fahrzeug- bzw. Aufbau-Chassis für die Aufnahme des Ladegutbehälters und unterhalb des Ladegutbehälters angeordnet, so dass sie, wie bereits oben beschrieben, innerhalb der das Fahrzeug mit aufliegendem Behälter in Draufsicht umschreibenden Kontur liegen.

Um die beiden Abdeckbetätigungsarme von der ersten seitlichen Stellung über die Vertikale in die zweite seitliche Stellung zu verschwenken, ist es bevorzugt, dass der vordere und der hintere Abdeckbetätigungsarm einzeln vermittels einer jeweiligen Schwenkantriebsvorrichtung, vorzugsweise eines jeweiligen Hydraulikantriebs, in ihrer jeweiligen Schwenkebene verschwenkbar sind. Dabei können diese beiden Hydraulikantriebe gesondert angesteuert werden, so dass unterschiedliche Schwenkstellungen der beiden Abdeckbetätigungsarme möglich sind. Es ist aber auch denkbar, die beiden Schwenkantriebsvorrichtungen über eine geeignete Steuereinheit zu synchronisieren, so dass sich die beiden Abdeckbetätigungsarme jederzeit in der gleichen Schwenkstellung befinden. Bei einer solchen synchronen Steuerung ist aber darauf hinzuweisen, dass diese unterbrochen wird, wenn die Abdeckbetätigungsarme von dem Abdeckbetriebszustand in die Transportsteiiung gebracht werden sollen.

Selbstverständlich ist auch das Aufdecken des Ladegutbehälters, d. h. das Abziehen des Abdeckelementes vom Ladegutbehälter möglich, indem die vorstehend beschriebenen Bewegungsabläufe im Wesentlichen umgekehrt werden.

Beim vermittels des Abdecksystems abzudeckenden Ladegutbehälter handelt es sich vorzugsweise um einen Abrollkipperbehälter, der vermittels eines am Lastenfahrzeug angebrachten Hakenauslegers auf das Lastenfahrzeug gezogen bzw. von diesem abgerollt werden kann. Denkbar sind neben solchen Abrollkipperbehältern auch oben offene Container, welche beispielsweise durch einen Kran auf das Lastenfahrzeug gesetzt werden. Ferner ist es auch denkbar, ein oben beschriebenes Abdecksystem auch an einem Lastenfahrzeug anzubringen, das einen fest angebrachten, nach oben offenen Behälter aufweist, der beispielsweise nur gekippet werden kann, um das Ladegut aus dem Behälter herausfallen zu lassen.

Nachfolgend wird die Erfindung beispielhaft anhand einer nicht einschränkenden Ausführungsform unter Bezugnahme auf die beigefügten Zeichnungen beschrieben.
- Fig. 1: ist eine schematische Seitenaufrissansicht eines Lastentransportfahrzeugs mit einem darauf positionierten Ladegutbehälter und einem Abdecksystem in seiner Transportstellung.
- Fig. 2: ist eine Draufsicht von oben auf das Lastentransportfahrzeug mit Ladegutbehälter gemäß dem Pfeil II der Fig. 1.
- Fig. 3: ist eine Draufsicht auf das Lastentransportfahrzeug ohne Ladegutbehälter mit dem Abdecksystem in seiner Transportstellung.
- Fig. 4: ist eine Draufsicht auf das Lastentransportfahrzeug, wobei ein Ausleger des Abdecksystems ausgeklappt ist.
- Fig. 5: ist eine Draufsicht auf das Lastentransportfahrzeug, wobei zusätzlich zum ausgeklappten Ausleger ein hinterer Abdeckbetätigungsarm ausgeklappt ist.
- Fig. 6: ist eine Draufsicht auf das Lastentransportfahrzeug, wobei das Abdecksystem mit seinen beiden Abdeckbetätigungsarmen und zwischen diesen eingefügtem Stabelement in einer ersten seitlichen Position A dargestellt ist.
- Fig. 7: zeigt eine Draufsicht auf das Lastentransportfahrzeug, wobei das Abdecksystem in eine zweite Position B verschwenkt ist.
- Fig. 8: zeigt eine Draufsicht auf das Lastentransportfahrzeug, wobei das Abdecksystem in einer zweiten seitlichen Stellung C verschwenkt ist.
- Fig. 9: zeigt eine Aufrissansicht des hinteren Abdeckbetätigungsarms und des Ladegutbehälters entsprechend dem Pfeil IX in Fig. 1, wobei der hintere Abdeckbetätigungsarm in den den Fig. 6-8 entsprechenden Schwenkstellungen A - C und einer möglichen Fixierstellung D dargestellt ist.
- Fig. 10: zeigt eine Aufrissansicht von vorne des vorderen Abdeckbetätigungsarms und des Ladegutbehälters entsprechend dem Pfeil X der Fig. 1, wobei der vordere Abdeckbetätigungsarm in den Schwenkstellungen A - C sowie in seiner Transportstellung T dargestellt ist.
- Fig. 11: zeigt eine perspektivische Ansicht des Lastentransportfahrzeugs mit dem Abdecksystem in der Schwenkstellung C entsprechend der Fig. 8.

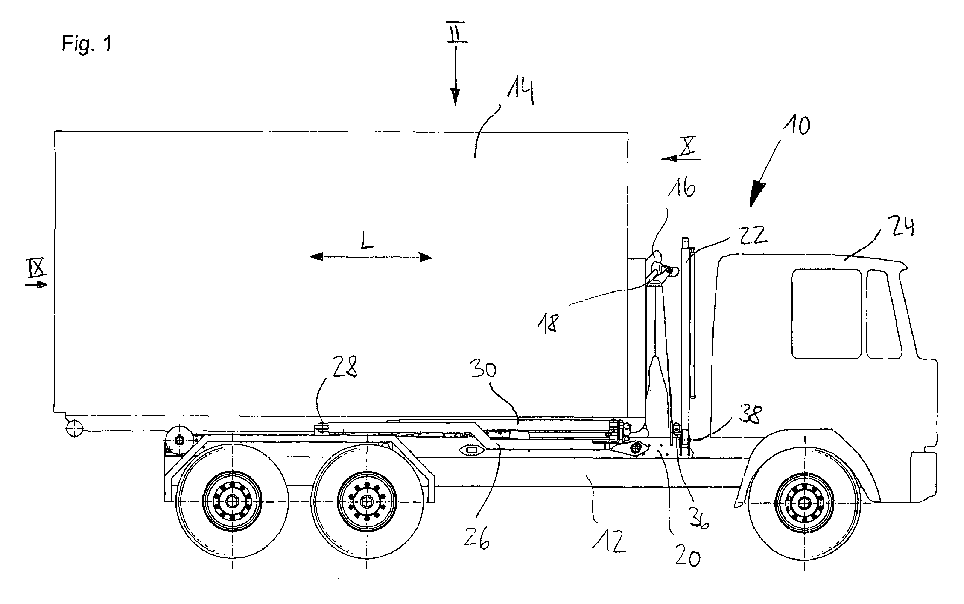

In Fig. 1 ist ein Lastentransportfahrzeug in Form eines Abrollkippers 10 dargestellt, auf dessen Chassis 12 ein Abrollkipperbehälter 14 aufliegt. Der Abrollkipper 10 verfügt über einen Hakenausleger 16, an dem ein am Abrollkipperbehälter 14 angebrachter Bügel 18 eingehängt ist, so dass der Abrollkipperbehälter 14 vom Abrollkipper 10 abgerollt bzw. auf diesen gezogen werden kann.

Auf dem Chassis 12 des Abrollkippers 10 ist ein Abrollkipperunterbau 20 angebracht, wie er dem Fachmann hinlänglich bekannt ist. Der Unterbau 20 weist an seinem vorderen Ende einen vorderen schwenkbaren Abdeckbetätigungsarm 22 auf, der in Fahrzeuglängsrichtung L zwischen dem Hakenausleger 16 und einer Führerkabine 24 des Abrollkippers 10 angeordnet ist und in einer zur Papierebene orthogonalen Schwenkebene bewegt werden kann. Parallel zur Fahrzeuglängsrichtung erstreckt sich seitlich des Unterbaus 20 ein Ausleger 26, der an einem Drehgelenk 28 am Unterbau 20 angebracht ist. Mit dem Ausleger 26 ist ein zweiter Abdeckbetätigungsarm 30 gelenkig verbunden, wobei dieser in Fahrzeuglängsrichtung im Wesentlichen parallel zum Ausleger 26 verläuft. Der Ausleger 26 und der Abdeckbetätigungsarm 30 sind hier in einer Transportstellung dargestellt, in der sie unterhalb des zu transportierenden Behälters 14 und seitlich vom Unterbau 20 verstaut sind.

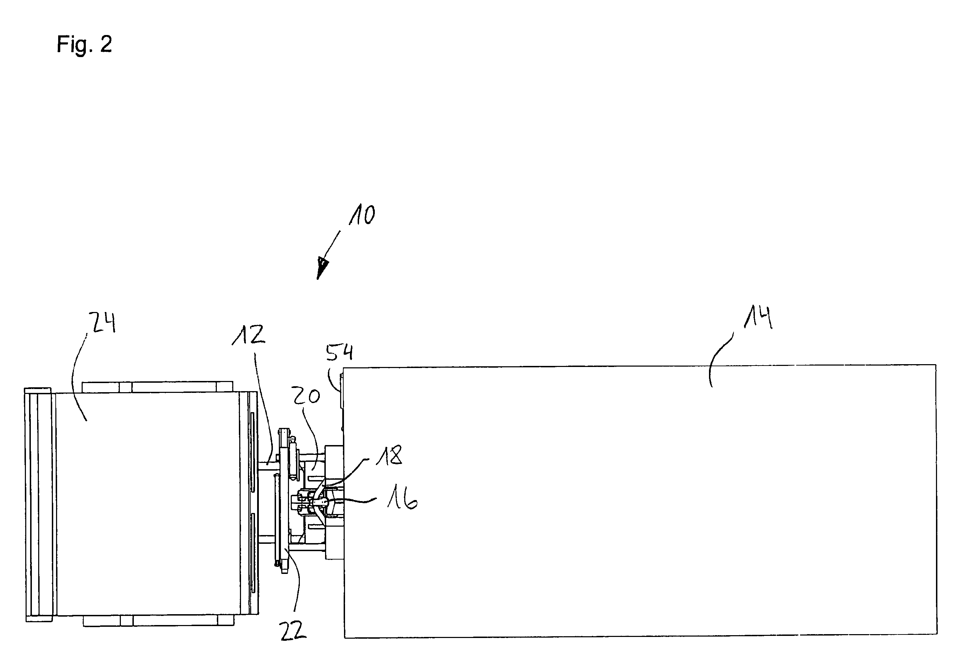

Wie aus der Fig. 2 ersichtlich, liegen der vordere Schwenkarm 22 sowie der unterhalb des Behälters 14 liegende Ausleger 26 und der Schwenkarm 30 in der Transportstellung innerhalb einer den Abrollkipper 10 mit dem Behälter 14 umschreibenden Kontur.

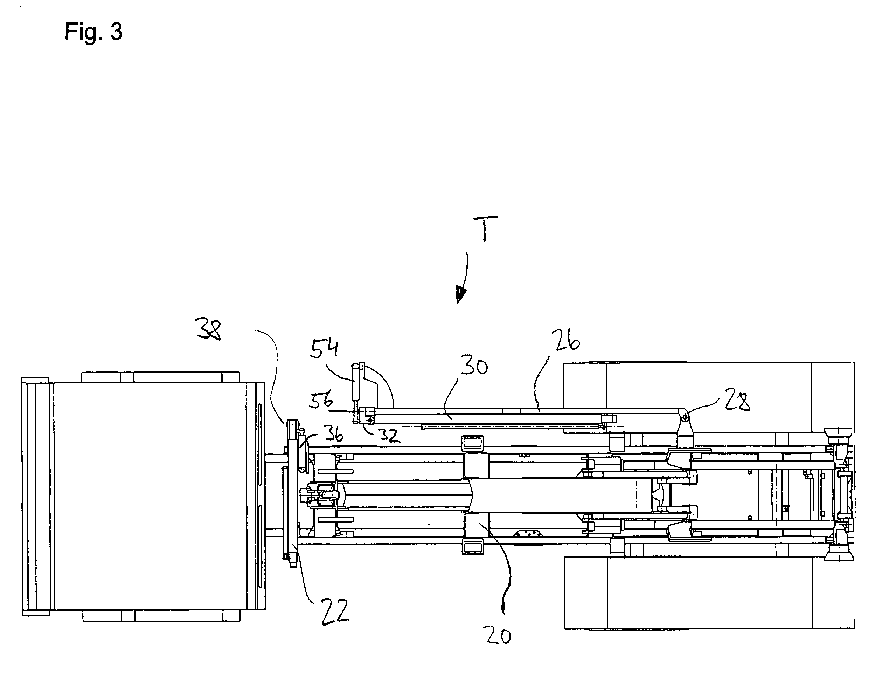

Nachfolgend wird Bezug nehmend auf die Fig. 3 - 6 beschrieben, wie die Abdeckbetätigungsarme 22 und 30 von ihrer Transportstellung T gemäß Fig. 3 in einen Abdeckbetriebszustand gebracht werden.

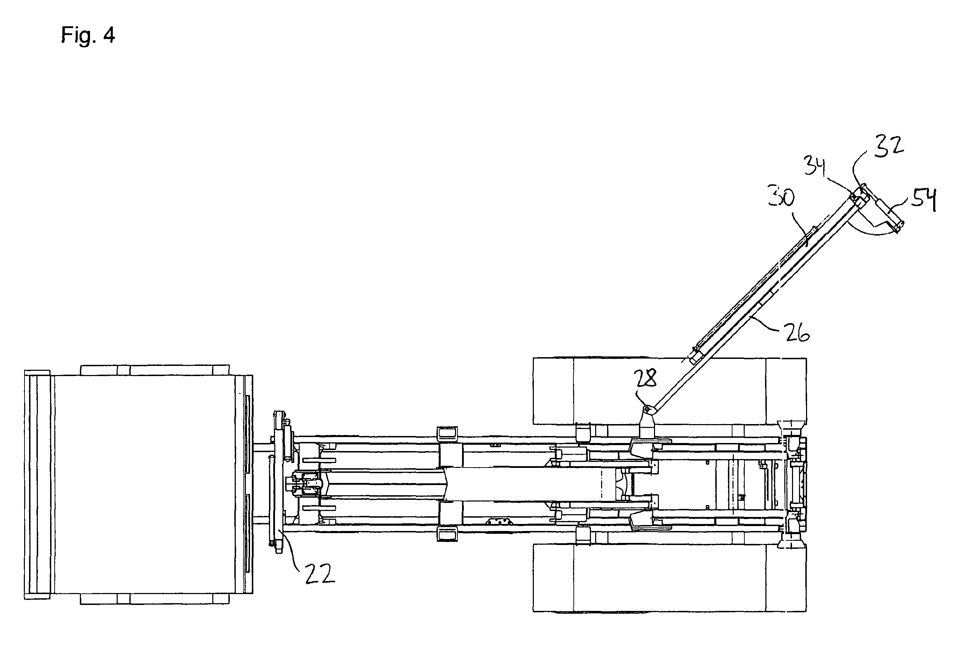

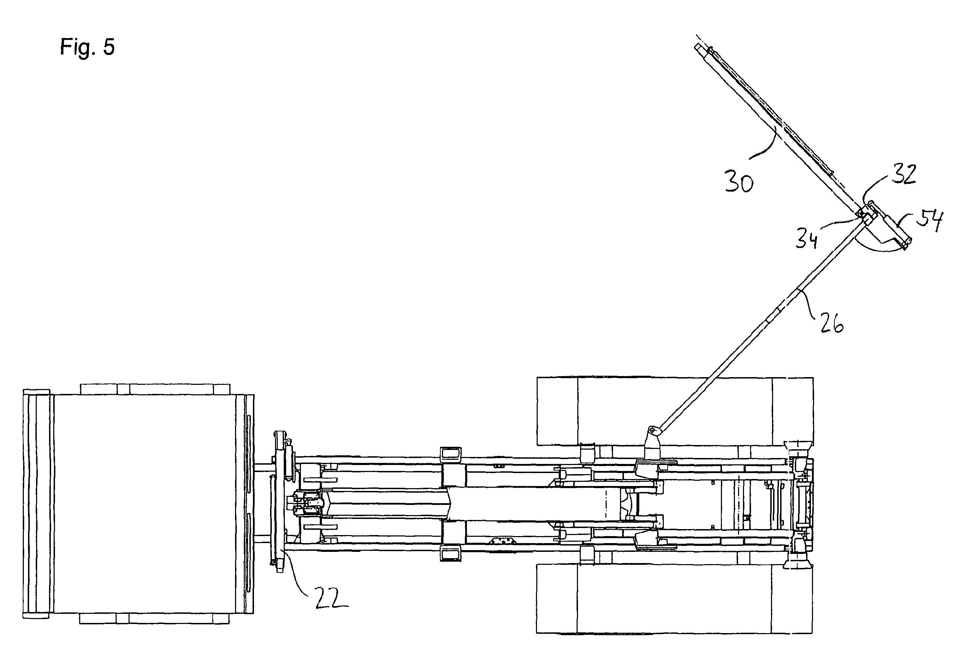

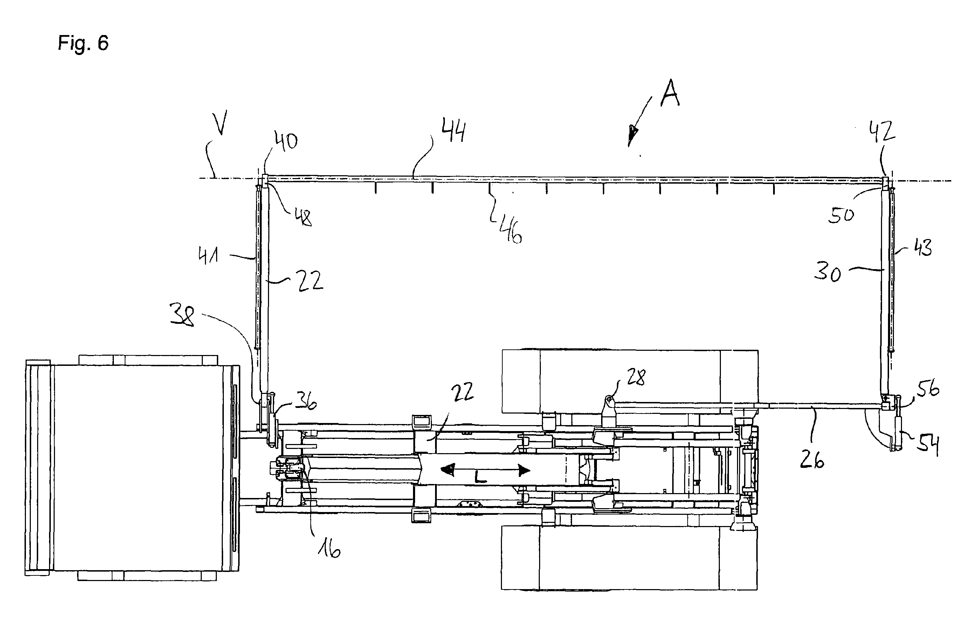

In der Draufsicht gemäß Fig. 3 ist ersichtlich, dass der Ausleger 26 vermittels des Drehgelenks 28 seitlich am Unterbau 20 angebracht ist. Um den hinteren Schwenkarm bzw. Abdeckbetätigungsarm 30 in den Abdeckbetriebszustand zu überführen, wird der Ausleger 26 in einem ersten Schritt um das Gelenk 28 in einer zur Papierebene parallelen Auslegerebene verschwenkt, so dass er sich vom Unterbau 20 entfernt. Hierdurch wird der Schwenkarm 30, der in der Transportstellung zwischen dem Ausleger 26 und dem Unterbau 20 angeordnet ist, zugänglich. Der Schwenkarm 30 ist über einen Gelenkabschnitt 32 derart mit dem Ausleger 26 verbunden, dass er in der Auslegerebene um ein erstes Drehgelenk 34 verschwenkt werden kann. Der Schwenkarm 30 kann in der in Fig. 5 dargestellten Position, in der er sich orthogonal zum Ausleger 26 erstreckt, bezüglich des Auslegers arretiert werden, so dass ein unbeabsichtigtes Einklappen des Schwenkarms 30 in eine Stellung gemäß Fig. 4 nicht möglich ist. Der Schwenkarm 30 und der Ausleger 26 werden anschließend weiter verschwenkt, bis der Ausleger 26 um 180° um das Drehgelenk 28 verschwenkt ist, so dass er wieder parallel zur Fahrzeuglängsrichtung verläuft. Der Schwenkarm 30 befindet sich dann in dem in Fig. 6 dargestellten Abdeckbetriebszustand und verläuft orthogonal zur Fahrzeuglängsrichtung. Selbstverständlich kann auch der Ausleger 26 im in Fig. 6 dargestellten Abdeckbetriebszustand gewünschtenfalls arretiert werden.

Der vordere Abdeckbetätigungsarm bzw. Schwenkarm 22 kann beim Ausklappen des Auslegers 26 und des Schwenkarms 30 in seiner in den Fig. 3 - 5 dargestellten Transportstellung bleiben. Um auch den Schwenkarm 22 in den Abdeckbetriebszustand gemäß Fig. 6 zu bringen, wird er vermittels eines Hydraulikzylinders 36 um ein mit dem Unterbau 20 verbundenes Drehgelenk 38 in einer zur Auslegerebene orthogonalen Schwenkebene nach außen verschwenkt. Wenn die beiden Schwenkarme 22 und 30 im Abdeckbetriebszustand in einer ersten seitlich orientierten Stellung A gemäß Fig. 6 angeordnet sind, kann zwischen ihren jeweiligen freien Enden 40, 42 eine Stange 44 eingesetzt werden, an der Haken 46 vorgesehen sind. Die Stange 44 ist vorzugsweise in ihrer Länge verstellbar, um sie ebenfalls beispielsweise seitlich am Unterbau 20, insbesondere auf der dem Ausleger und dem Schwenkarm 30 in ihrer Transportstellung gegenüberliegenden Seite zu verstauen. Die Stange 44 verläuft entlang einer Verbindungslinie V, welche sich parallel zur Fahrzeuglängsrichtung L erstreckt. Die beiden Schwenkarme 22, 30 sind teleskopierbar in ihrer Länge verstellbar, wobei hierzu jeweilige Hydraulikzylinder 41 und 43 verwendet werden. In der in der Fig. 6 dargestellten ersten seitlichen Stellung A sind die teleskopierbaren Abschnitte 48 und 50 der beiden Schwenkarme 22 und 30 in ihrer eingezogenen Stellung dargestellt.

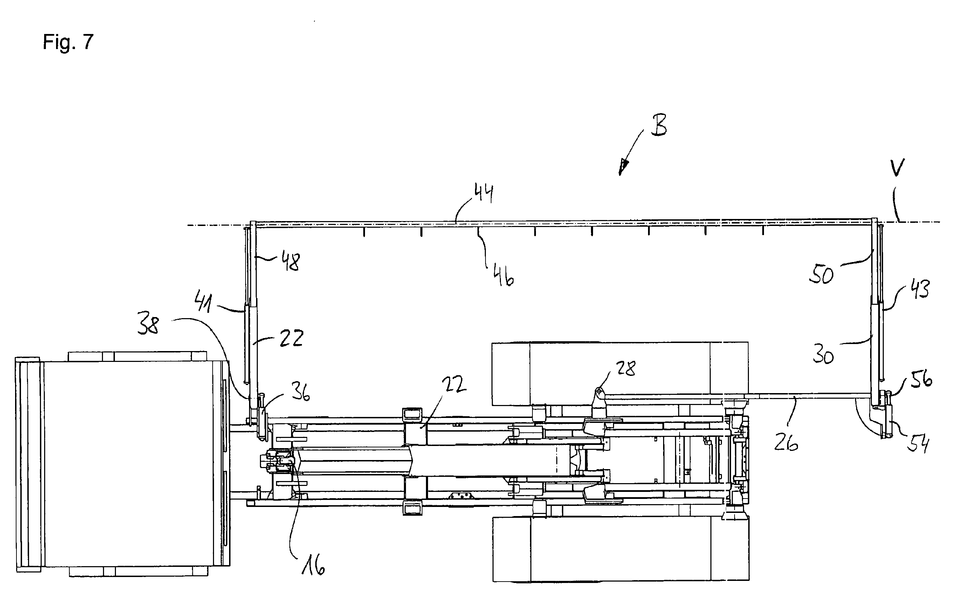

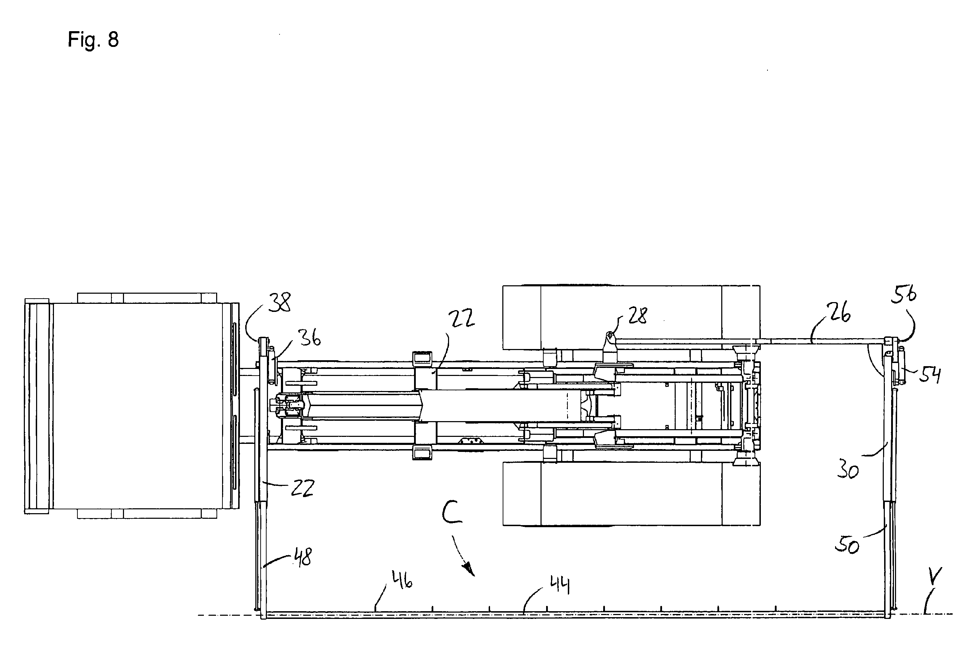

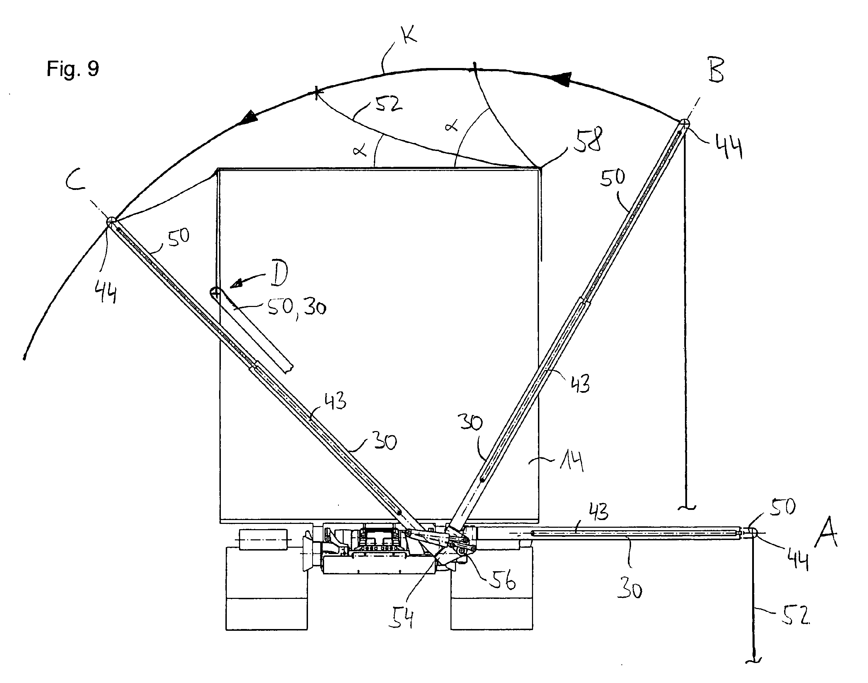

Das in den Fig. 7 und 8 in Draufsicht dargestellte Verschwenken des Abdecksystems über eine Schwenkstellung B in eine zweite seitliche Position C wird nachfolgend anhand der Aufrissansicht gemäß Fig. 9 im Detail erklärt. Zur einfachen Identifizierbarkeit der einzelnen Bauteile sind auch in diesen Figuren die Bezugszeichen eingefügt, obwohl auf eine detaillierte Beschreibung dieser Figuren verzichtet wird.

An die Stange 44 wird ein Abdeckelement 52, beispielsweise ein Netz oder eine Plane, in der ersten seitlichen Stellung A der beiden Schwenkarme 22, 30 angehängt. Das Verschwenken wird nachfolgend nur für den hinteren Schwenkarm 30 beschrieben, wobei klar ist, dass der vordere Schwenkarm 22 in analoger Weise, vorzugsweise synchron verschwenkt wird, um das Abdeckelement 52 über den Behälter 14 zu ziehen. In der ersten seitlichen Stellung A ist der teleskopierbare Abschnitt 50 des Schwenkarms 30 ganz eingezogen, so dass beim Anheben des angehängten Abdeckelements 52 eine möglichst geringe Hebelkraft vom Hydraulikzylinder 54 überwunden werden muss, weicher den Schwenkarm 30 in Schwenkbewegung um die Schwenkachse 56 versetzt. Wenn der Schwenkarm 30 aus der ersten seitlichen Position A zum Behälter hin angehoben wird, kann der teleskopierbare Abschnitt 50 bei einer gewissen Schwenkstellung ausgefahren werden, so dass der Schwenkarm 30 eine Länge aufweist, die größer ist als die Höhe des abzudeckenden Ladegutbehälters 14. Das Ausfahren des teleskopischen Abschnitts 50 kann entweder manuell gesteuert werden oder aber durch eine zentrale Steuerung in Abhängigkeit von der Schwenkstellung des Schwenkarms 30.

In der mit B bezeichneten Schwenkstellung ist das Abdeckelement 52 normalerweise nicht mehr in Kontakt mit dem Boden und hängt frei an der Stange 44. Beim Verschwenken des nun ausgefahrenen Schwenkarms 30 kommt das Abdeckelement in Berührung mit einer oberen Längskante 58 des Behälters 14 und wird in Breitenrichtung über den Ladegutbehälter 14 gezogen. Dabei weist die Stange 44 bzw. eine durch diese repräsentierte Verbindungslinie V der beiden Schwenkarme einen bei unveränderter Länge des Schwenkarms durch den Kreisbogen K angedeuteten Mindestabstand zum Behälter 14 auf. Da das Abdeckelement 52 nur über die Breitseite des Ladegutbehälters von einer Seite zur anderen gezogen werden muss, bildet sich zwischen dem Abdeckelement 52 und der Behälteroberseite über einen großen Teil der Schwenkbewegung ein großer Winkel α aus, so dass ein relativ großer Abstand zwischen dem Abdeckelement 52 und über die oberen Kanten des Ladegutbehälters 14 hervorstehendem Ladegut gebildet wird. Hierdurch kann die Abdeckung schnell und problemlos über den Behälter gezogen werden. In einer mit C bezeichneten zweiten seitlichen Schwenkstellung ist der Behälter mit dem Abdeckelement 52 bedeckt, wobei das Abdeckelement 52 an den Außenwänden des Behälters beispielsweise durch Haken-Ösen-Verbindungen gesichert ist. Selbstverständlich sind auch eine Plane bzw. ein Netz umfassende Gummibänder denkbar, welche an Haken am Behälter eingehängt werden.

Um nach dem Drüberziehen des Abdeckelements 52 das Abdeckelement auf der bezogen auf Fig. 9 linken Seite des Behälters 14 zu fixieren, sind zwei Alternativen möglich. Einerseits kann das Abdeckelement von der Stange abgehängt werden und wie auf der rechten Seite des Behälters vermittels Haken-Ösen-Verbindungen oder dgl. an der Behälteraußenwand befestigt werden. Andererseits ist es aber auch denkbar, dass die beiden Schwenkarme 30 und 22 so weit eingezogen werden und in ihrer Schwenkstellung angepasst werden, dass die Stange 44 direkt an der Außenwand des Behälters 14 anliegt und dass durch die Schwenkarme und die Stange 44 eine Zugkraft auf das an den Haken 46 eingehängte Abdeckelement 52 ausgeübt wird. Eine solche Fixierstellung ist in der Fig. 9 schematisch bei D dargestellt.

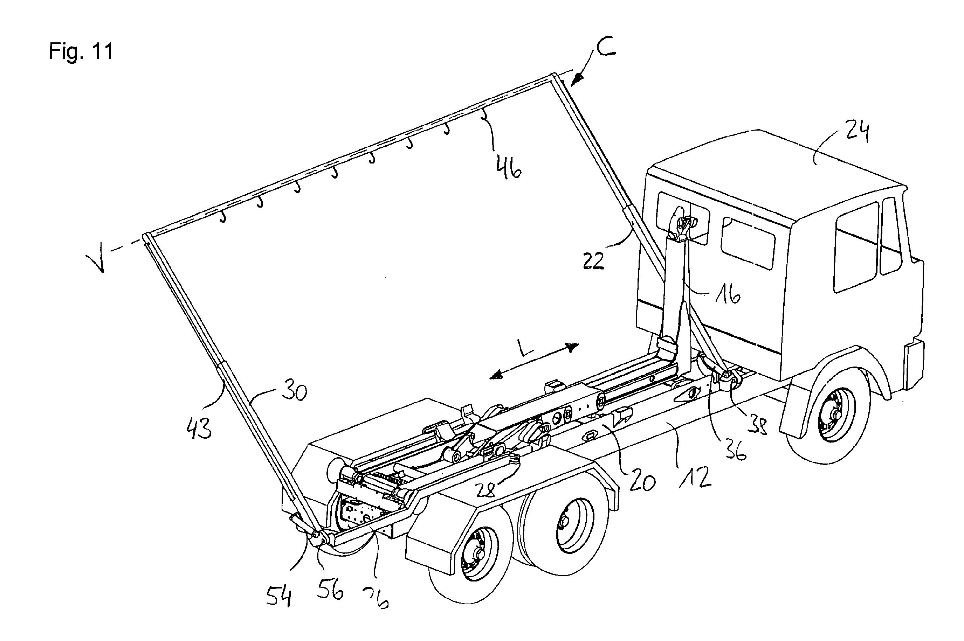

Unter Bezugnahme auf die Figur 11, in der das Abdecksystem ohne Behälter und Abdeckelement in der zweiten seitlichen Position C dargestellt ist, ist ersichtlich, dass die Haken 46 der Stange 44 derart orientiert sind, dass das Aushängen des Abdeckelements sehr einfach ist. Das heißt, dass jeweilige freie Enden der Haken 46 vom Behälter abgewandt sind, wodurch das Abdeckelement in im Wesentlichen horizontaler Richtung von den Haken 46 entfernt werden kann, ohne dass es hierzu vertikal angehoben werden muss. Falls das Abdeckelement vermittels derart orientierter Haken in einer Position D gemäß Fig. 9 gehalten werden soll, kann das Abdeckelement aufgrund der wirkenden Zugkräfte nicht von den Haken gelöst werden.

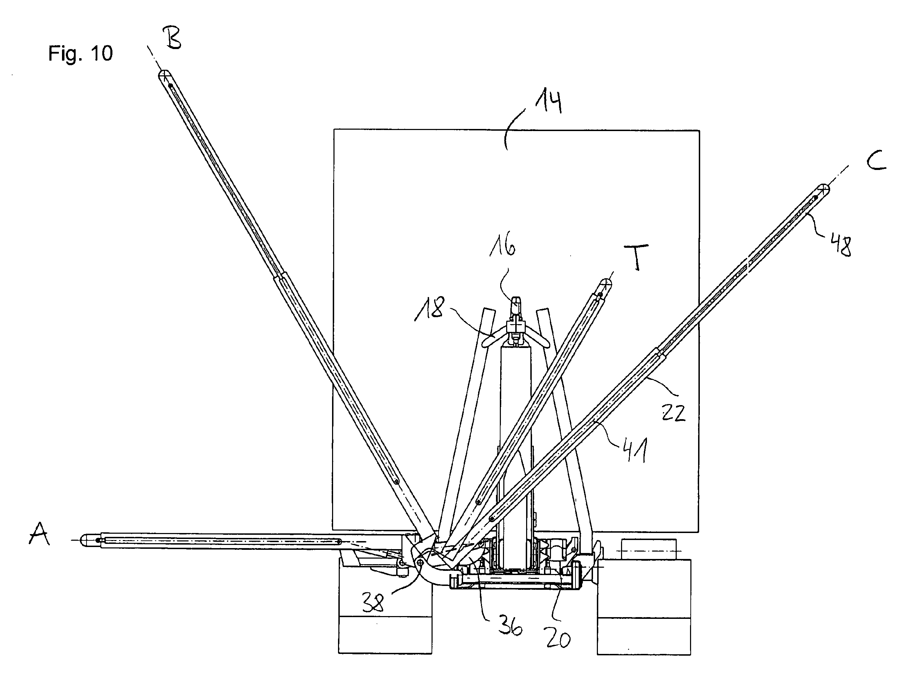

Der Vollständigkeit halber wird noch auf die Figur 10 hingewiesen, in der der vordere Schwenkarm in den für den hinteren Schwenkarm 30 bezogen auf die Figur 9 beschriebenen Schwenkstellungen A, B und C dargestellt ist. Ferner zeigt diese Figur noch eine Schwenkposition T, welche einer Transportstellung des vorderen Schwenkarms 22 entspricht. Analog zum hinteren Schwenkarm wird auch der vordere Schwenkarm 22 vermittels der Hydraulikantriebsvorrichtung 36 um die Schwenkachse 38 gedreht.

Das im Ausführungsbeispiel der Figuren 1 - 11 vorgestellte Abdecksystem wird hydraulisch gesteuert und die Schwenkbewegungen der beiden Schwenkarme 22, 30 von der ersten seitlichen Stellung A in die zweite seitliche Stellung C kann einzeln oder über eine entsprechende Steuerung auch gekoppelt erfolgen. Ferner wird auch die Längenverstellung der beiden Schwenkarme 22, 30 durch einen Hydraulikzylinder erreicht, der für jeden Schwenkarm separat angesteuert werden kann. Auch hier ist eine Kopplung der Längenverstellung über eine entsprechende Steuerung denkbar und insbesondere ist es auch denkbar, die Längenverstellung automatisch in Abhängigkeit vom Schwenkzustand zu steuern.

Beim vorstehenden Abdecksystem kann auf die im Stand der Technik bekannt gewordene Abrollvorrichtung für ein Abdeckelement verzichtet werden, was den Aufbau und insbesondere die Zuverlässigkeit des Abdecksystems deutlich verbessert. Das Ausschwenken des hinteren Schwenkarms 30 aus seiner Transportstellung in den Abdeckbetriebszustand, wie dies Bezug nehmend auf die Figuren 4 - 6 beschrieben worden ist, kann mit wenigen einfachen Handgriffen erfolgen.

Es wird ferner auch darauf hingewiesen, dass mit dem vorgestellten Abdecksystem ein Abrollkipperbehälter abgedeckt werden kann, der im abgedeckten Zustand auf einen Anhänger gerollt werden soll, was mit den bekannten Systemen aufgrund des am Fahrzeug fest angebrachten Rollenmechanismus nicht möglich ist. Hierzu ist es natürlich erforderlich, dass der hintere Abdeckbetätigungsarm 30 in seine Transportstellung verschwenkt wird, damit das Abrollen des Behälters ohne Probleme erfolgen kann.

Das vorgestellte Abdecksystem ist insbesondere auch bei hohen Behältern, welche eine Höhe von ca. 2,5 m aufweisen, sehr vorteilhaft, da bei derartigen Behältern das manuelle Drüberziehen eines Abdeckelements, insbesondere eines Netzes, sehr arbeitsintensiv ist und ggf. unter Zuhilfenahme einer Leiter durchgeführt werden muss. Insoweit führt die Verwendung eines solchen Abdecksystems auch zu einer erheblichen Zeitersparnis beim Abdecken von Ladegutbehältern.

Das vorgestellte Abdecksystem eignet sich auch dazu, einen Behälter 14 mit einer Plane 52 oder einem Netz 52 abzudecken und den abgedeckten Behälter dann auf einen Anhänger des Lastentransportfahrzeugs oder auf ein anderes Transportfahrzeug oder auf einen stationären Lagerplatz zu transportieren, um danach ggf. einen weiteren Behälter 14 aufzunehmen und abzudecken.

Somit ist es z.B. ohne weiteres möglich, bei einem Abrollkipper-Lastzug sowohl den Behälter für den Anhänger als auch den Behälter für das Zugfahrzeug mit ein- und demselben Abdecksystem abzudecken.

## Patentansprüche

1. Lastentransportfahrzeug mit einem Abdecksystem zum Abdecken eines auf einem Ladebereich des Lastentransportfahrzeugs (10) positionierten Ladegutbehälters (14) unter Verwendung eines flexiblen Abdeckelements (52), wobei das Abdecksystem zwei Abdeckbetätigungsarme (22, 30) umfasst zur Handhabung des flexiblen Abdeckelementes (52) in einem Abdeckbetriebszustand (A, B, C, D) und wobei die Abdeckbetätigungsarme (22, 30) in dem Abdeckbetriebszustand (A, B, C, D) in Fahrzeuglängsrichtung (L) vor und hinter dem Ladebereich positioniert und quer zur Fahrzeugslängsrichtung (L) von einer ersten seitlich orientierten Stellung (A) über die Vertikale hinaus zu einer zweiten seitlich orientierten Stellung (C) schwenkbar sind, um das längs einer Verbindungslinie (V) zwischen den freien Enden (40, 42) der Abdeckbetätigungsarme (22, 30) hängend gehaltene Abdeckelement (52) unter Aufrechterhaltung eines Mindestabstandes zwischen der Verbindungslinie (V) und dem Ladegutbehälter (14) über den Ladegutbehälter (14) zu ziehen.

2. Lastentransportfahrzeug nach Anspruch 1, **dadurch gekennzeichnet, dass** die Abdeckbetätigungsarme (22, 30) insbesondere teleskopisch längenverstellbar sind.

3. Lastentransportfahrzeug nach Anspruch 2, **gekennzeichnet durch** eine Antriebseinrichtung (41, 43) zur automatischen Längenverstellung der Abdeckbetätigungsarme (22, 30).

4. Lastentransportfahrzeug nach Anspruch 3, **dadurch gekennzeichnet, dass** die Antriebseinrichtung insbesondere für jeden Abdeckbetätigungsarm (22, 30) einen Hydraulikzylinder (41, 43) oder einen Pneumatikzylinder oder einen Elektromotor umfasst.

5. Lastentransportfahrzeug nach einem der Ansprüche 1 bis 4, **dadurch gekennzeichnet, dass** im Abdeckbetriebszustand (A, B, C, D) zwischen den beiden Abdeckbetätigungsarmen (22, 30) ein von diesen gesondertes Stabelement (44) befestigbar ist, an dem das Abdeckelement (52) anbringbar ist, wobei das Stabelement (44) vorzugsweise in seiner Länge verstellbar ist.

6. Lastentransportfahrzeug nach einem der Ansprüche 1 bis 5, **dadurch gekennzeichnet, dass** die beiden Abdeckbetätigungsarme (22, 30) in einer Transportstellung (T) positionierbar sind, in der sie innerhalb einer das Fahrzeug (10) mit aufliegendem Behälter (14) in Draufsicht umschreibenden Kontur liegen.

7. Lastentransportfahrzeug nach Anspruch 6, **dadurch gekennzeichnet, dass** der vor dem Ladebereich angeordnete vordere Abdeckbetätigungsarm (22) in seiner Transportstellung (T) innerhalb einer Schwenkebene liegt, in der er im Abdeckbetriebszustand (A, B, C, D) schwenkbar ist.

8. Lastentransportfahrzeug nach Anspruch 6 oder 7, **dadurch gekennzeichnet, dass** der hinter dem Ladebereich angeordnete hintere Abdeckbetätigungsarm (30) in seiner Transportstellung (T) quer zu der Schwenkebene orientiert ist, in der er im Abdeckbetriebszustand (A, B, C, D) schwenkbar ist.

9. Lastentransportfahrzeug nach Anspruch 8, **dadurch gekennzeichnet, dass** der hintere Abdeckbetätigungsarm (30) beweglich an einem drehbar am Fahrzeug angebrachten Ausleger (26) angebracht ist.

10. Lastentransportfahrzeug nach Anspruch 9, **dadurch gekennzeichnet, dass** der Ausleger (26) von der Transportstellung (T) in den Abdeckbetriebszustand (A, B, C, D) in einer zur Schwenkebene des hinteren Abdeckbetätigungsarms (30) im Wesentlichen orthogonalen Auslegerebene drehbar ist, vorzugsweise um etwa 180°.

11. Lastentransportfahrzeug nach Anspruch 10, **dadurch gekennzeichnet, dass** der hintere Abdeckbetätigungsarm (30) bezüglich des Auslegers (26) in der Auslegerebene drehbar ist, vorzugsweise um etwa 90°.

12. Lastentransportfahrzeug nach Anspruch 11, **dadurch gekennzeichnet, dass** der Ausleger (26) und der hintere Abdeckbetätigungsarm (30) in der Transportstellung (T) im Wesentlichen parallel zueinander sowie parallel zur Fahrzeuglängsrichtung (L) seitlich von einer Fahrzeuglängsmittellinie am Lastenfahrzeug (10) angeordnet sind.

13. Lastentransportfahrzeug nach einem der vorhergehenden Ansprüche, **dadurch gekennzeichnet, dass** der vordere und der hintere Abdeckbetätigungsarm (22, 30) einzeln vermittels einer jeweiligen Schwenkantriebsvorrichtung (36, 54), vorzugsweise eines jeweiligen Hydraulikantriebs, in ihrer jeweiligen Schwenkebene verschwenkbar sind.

14. Lastentransportfahrzeug nach einem der vorhergehenden Ansprüche, **dadurch gekennzeichnet, dass** der Ladegutbehälter ein Abrollkipperbehälter (14) ist, der vermittels eines am Lastenfahrzeug (10) angebrachten Hakenauslegers (16) auf das Lastenfahrzeug (10) gezogen bzw. von diesem abgerollt werden kann.
